Europäisches Patentamt

European Patent Office

Office européen des brevets

(19)

(11) Publication number: **0 161 108**

**A2**

(12) # EUROPEAN PATENT APPLICATION

(21) Application number: **85303189.6**

(22) Date of filing: **03.05.85**

(51) Int. Cl.⁴: **B 62 B 3/10**

(30) Priority: **04.05.84 US 606949**

(43) Date of publication of application:
**13.11.85 Bulletin 85/46**

(84) Designated Contracting States:
**AT BE CH DE FR GB IT LI LU NL SE**

(71) Applicant: **Rehrig, B. Houston**
**4539 Gorham Street**
**Corona Del Mar California 92625(US)**

(72) Inventor: **Rehrig, B. Houston**
**4539 Gorham Street**
**Corona Del Mar California 92625(US)**

(74) Representative: **Frost, Dennis Thomas et al,**
**WITHERS & ROGERS 4 Dyer's Buildings Holborn**
**London, EC1N 2JT(GB)**

(54) **Wheel assembly.**

(57) A wheel assembly adapted to be fastened to a projecting support member (8) of a wheeled structure. The wheel assembly comprises a pair of spaced parallel flanges (1, 2) which defines a cavity (3) for receiving a wheel assembly support (8) at one end and a cavity (4) receiving a wheel (11) at the other end. A plurality of strengthening ribs (6, 7) are formed in each flange adjacent the wheel assembly support cavity (3). The portion of the flanges (1, 2) which form the wheel supporting cavity (4) are outwardly convex in shape around the wheel (11). Thus, the wheel assembly in accordance with the present invention may be fabricated of light gauge sheet metal without sacrificing strength.

FIG. 2.

EP 0 161 108 A2

# WHEEL ASSEMBLY

## BACKGROUND OF THE INVENTION

The present invention relates generally to the field of wheeled carts similar to those used as grocery shopping carts in supermarkets and the like, and more particularly, is directed to a new and improved wheel assembly for use with such carts.

Carts of the type used in supermarkets and the like are usually comprised of a wheeled tubular metal frame to which is attached a basket of open wire work or plastic construction. Ideally, these carts should be easy to push and maneuver. Much has been done to improve the maneuverability of carts of the prior art and to make them less prone to damage and abuse. Many of these improvements have been directed toward the basket portion of the cart. See, for example, applicant's U.S. Patents Nos. 3,999,774 and 4,273,346. While the improvements disclosed by these patents have resulted in carts that are far superior to those previously known in the art, these carts remain deficient in the area of the wheel assembly used to support the cart frame.

Carts of the prior art have a plurality of wheel assemblies supporting the cart frame. The exposed nature of these wheel assemblies makes them subject to continuous impact with other carts and stationary objects. The rear wheel assemblies are particularly at risk because they usually are not permitted to swivel as are the front wheel assemblies. Thus, when impacted, rather than rotate with the force, the rear wheel assemblies must often absorb the full brunt of the impact, thereby increasing the likelihood that they will be damaged.

In conventional shopping carts, the wheel assemblies are usually riveted to the cart frame to provide the requisite integrity for strength and rigidity of the entire wheeled frame. The assemblies are, therefore, difficult to replace when they become damaged. Rather than replace damaged wheel assemblies, the cart is often discarded altogether or allowed to remain in service to the aggravation and consternation of the user.

Wheel assemblies known in the prior art are further deficient because of the use of heavy guage metal required to give them the requisite strength. Fabrication of the wheel assemblies is therefore expensive and time consuming.

## SUMMARY OF THE INVENTION

It is the overall object of the present invention to provide a new and improved wheel assembly which overcomes the disadvantages of wheel assemblies known in the prior art.

It is a specific object of the present invention to provide a new and improved wheel assembly which is economical to manufacture.

It is a further specific object of the present invention to provide a new and improved wheel assembly which may be manufactured from light guage sheet metal without sacrificing strength of the wheel assembly.

It is still a further object of the present invention to provide a new and improved wheel assembly which can be easily installed on a wheeled conveyance such as a cart and which can be easily replaced.

The wheel assembly in accordance with the present invention includes a pair of spaced flanges defining a cavity for receiving a wheel assembly support at one end and a cavity for receiving a wheel at the other end. The flanges are interconnected between each cavity to provide strength. The portion of the flanges which define the wheel assembly support cavity is ribbed to provide additional strength. A pair of holes is also formed in this portion of the flanges to receive a bolt or rivet for securing the wheel assembly to the wheel assembly support. The portion of the flanges which forms the cavity for receiving the wheel is outwardly curved around the wheel. Curvature of the flanges in this area further increases the strength of the wheel assembly.

The novel strengthening techniques employed in the present invention permit the wheel assembly to be fabricated from light guage sheet metal rather than heavier, more expensive stock. The use of a light weight strengthened assembly is important where the assembly supports a light weight chassis such as a plastic structure. See, for example, the copending U.S. Application Serial No. 607,128 (attorney's docket no. 13895 ). Thus, the wheel assembly of the present invention can be made much more economically. Moreover, the novel design of the wheel assembly permits it to be easily attached and removed from a cart or other conveyance. Thus, when a wheel assembly is damaged, it can be readily replaced.

## BRIEF DESCRIPTION OF THE DRAWINGS

Figure 1 is a side elevational view of the wheel assembly in accordance with the present invention.

Figure 2 is a front elevational view of the wheel assembly in accordance with the present invention.

Figure 3 is a sectional view taken along line 3-3 in Figure 2.

Figure 4 is a sectional view taken along line 4-4 in Figure 2.

Figure 5 is a sectional view taken along line 5-5 in Figure 2.

## DESCRIPTION OF THE PREFERRED EMBODIMENT

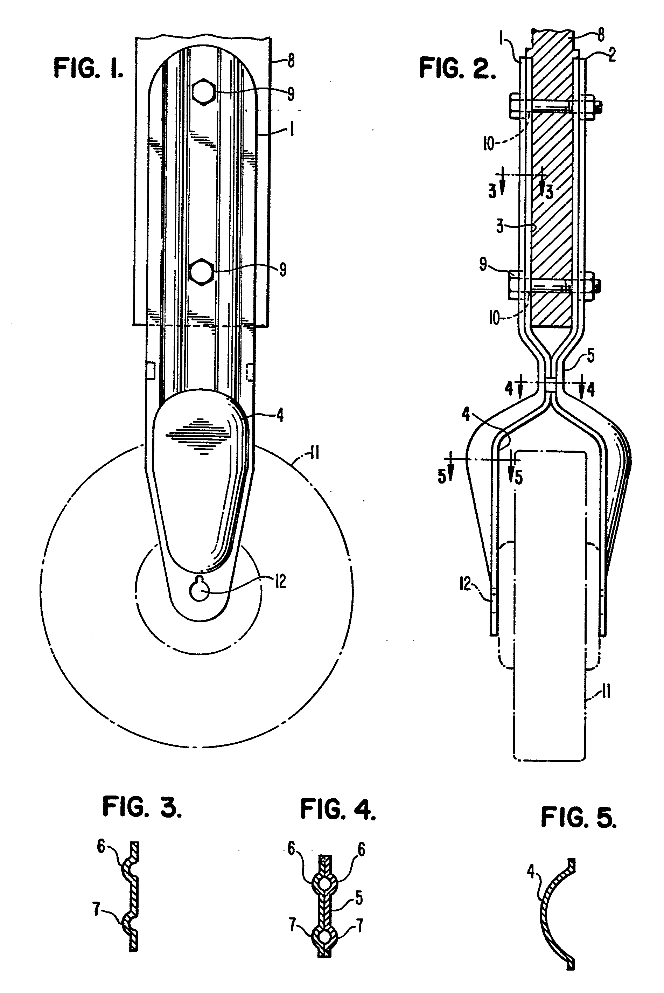

With reference to Figure 2, the wheel assembly of the present invention comprises flanges 1 and 2. The flanges extend in spaced parallel position to define a wheel assembly support cavity 3 adjacent one end of the flanges and a wheel receiving cavity 4 adjacent the other end of the flanges. The flanges are interconnected together at point 5 by fastening means known in the prior art such as welding, bolts and rivets.

As shown in Figure 3, the portion of the flanges forming the wheel assembly support cavity includes longitudinal ribs 6 and 7. Ribs 6 and 7 substantially increase the strength of the flanges in this area. The wheel assembly is further strengthened by the outwardly convex curvature of the flanges in the area forming the wheel receiving cavity. As shown in Figure 5, the curvature is quite pronounced and thus serves as a large strengthening rib over the entire surface area of each flange in this area.

As further shown in Figure 2, wheel assembly support cavity 3 receives support 8 which extends from a cart or other conveyance. Support 8 is retained in cavity 3 by bolts 9 received through apertures 10 formed in each flange. Wheel 11 is retained in wheel receiving cavity 4 by axle means 12.

Strengthening ribs 6 and 7 formed in the flanges adjacent wheel assembly support cavity 3 and the novel outwardly convex curvature of the flanges adjacent wheel receiving cavity 4 provide a wheel assembly which is extremely strong. Thus, the wheel assembly can be easily fabricated from light guage sheet metal rather than heavier, more expensive stock. In fact, the assembly can be stamped from such light guage stock. Thus, the wheel assembly can be made much more economically than wheel assemblies known in the prior art for the same strength. Moreover, the novel design of the wheel assembly wherein the wheel assembly support is received in cavity 3 and is retained there by bolts 9, permits the wheel assembly to be easily attached and removed from a cart or other wheeled conveyance. Thus, when a wheel assembly is damaged, it can be readily replaced.

Obviously, many modifications and variations of the above described preferred embodiment will become apparent to those skilled in the art from a reading of this disclosure. It should be realized that the invention is not limited to the particular apparatus disclosed, but its scope is intended to be governed by the scope of the appended claims.

CLAIMS:

1. A wheel assembly adapted to be fastened to a projecting support member (8) of a wheeled structure, said wheel assembly comprising a pair of longitudinally extending spaced flanges (1, 2) defining therebetween a support member receiving cavity (3) adjacent one end and a wheel supporting cavity (4) adjacent the other end and a wheel (11) rotatably supported on said flanges in said wheel supporting cavity.

2. The wheel assembly of claim 1, wherein said flanges (1, 2) are interconnected between said cavities (3, 4).

3. The wheel assembly of claim 1 or 2, wherein each of said flanges (1, 2) adjacent said support receiving cavity (3) comprises at least one longitudinal rib.

4. The wheel assembly of claim 3, wherein each of said flanges (1, 2) adjacent said support member receiving cavity (3) comprises two spaced longitudinal reinforcing ribs (6, 7).

5. The wheel assembly of claim 4, wherein each of said flanges (1, 2) has a plurality of mounting apertures (10) positioned between said spaced ribs (6, 7).

6. The wheel assembly of any preceding claim, wherein said flanges (1, 2) are formed of sheet metal and the portions of said flanges which define said wheel receiving cavity (4) have an outwardly convex shape.

1/1

**FIG. 1.**

**FIG. 2.**

**FIG. 3.**

**FIG. 4.**

**FIG. 5.**